(19) Europäisches Patentamt
European Patent Office
Office européen des brevets

(11) EP 2 028 943 B1

(12) **EUROPEAN PATENT SPECIFICATION**

(45) Date of publication and mention of the grant of the patent:
**03.04.2013 Bulletin 2013/14**

(21) Application number: **07725545.3**

(22) Date of filing: **21.05.2007**

(51) Int Cl.:
***A21D 2/18*** *(2006.01)* ***A23L 1/0522*** *(2006.01)*
***C08B 31/06*** *(2006.01)* ***A21D 6/00*** *(2006.01)*
***A23L 1/10*** *(2006.01)* ***A21D 10/02*** *(2006.01)*

(86) International application number:
**PCT/EP2007/004649**

(87) International publication number:
**WO 2007/134877 (29.11.2007 Gazette 2007/48)**

(54) **USE OF MODIFIED WHEAT FLOUR FOR REDUCING BAKING LOSSES**

VERWENDUNG VON MODIFIZIERTEM WEIZENMEHL ZUR VERRINGERUNG VON SCHWUND BEIM BACKEN

UTILISATION DE FARINE DE BLÉ MODIFIÉE AFIN DE RÉDUIRE LES PERTES DE CUISSON

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.05.2006 EP 06090087**
**25.05.2006 US 808336 P**

(43) Date of publication of application:
**04.03.2009 Bulletin 2009/10**

(73) Proprietor: **Bayer CropScience AG**
**40789 Monheim am Rhein (DE)**

(72) Inventors:
- **PILLING, Jens**
**44287 Dortmund (DE)**
- **BANAFA, Walid**
**10437 Berlin (DE)**

(74) Representative: **Beyer, Andreas et al**
**Bressel und Partner - Patentanwälte**
**Park Kolonnaden**
**Potsdamer Platz 10**
**10785 Berlin (DE)**

(56) References cited:
**EP-A2- 1 179 543** **EP-A2- 1 226 762**
**WO-A-2005/095619** **WO-A2-02/34923**
**GB-A- 787 026** **US-A1- 2005 191 387**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 028 943 B1

SEQUENCE LISTING

<110> Bayer CropScience AG

<120> Use of modified wheat flour for reducing baking losses

<130> BCS 06-5007 PCT

<150> EP 060 90 087.5
<151> 2006-05-24

<150> US 60/808,336
<151> 2006-05-25

<160> 2

<170> PatentIn version 3.3

<210> 1
<211> 4851
<212> DNA
<213> Solanum tuberosum

<220>
<221> CDS
<222> (105)..(4499)

<300>
<308> EMBL / Y09533
<309> 1998-07-30
<313> (105)..(4499)

<400> 1

```
catcttcatc gaatttctcg aagcttcttc gctaatttcc tggtttcttc actcaaaatc      60

gacgtttcta gctgaacttg agtgaattaa gccagtggga ggat atg agt aat tcc     116
                                                  Met Ser Asn Ser
                                                  1

tta ggg aat aac ttg ctg tac cag gga ttc cta acc tca aca gtg ttg     164
Leu Gly Asn Asn Leu Leu Tyr Gln Gly Phe Leu Thr Ser Thr Val Leu
5                   10                  15                  20

gaa cat aaa agt aga atc agt cct cct tgt gtt gga ggc aat tct ttg     212
Glu His Lys Ser Arg Ile Ser Pro Pro Cys Val Gly Gly Asn Ser Leu
                25                  30                  35

ttt caa caa caa gtg atc tcg aaa tca cct tta tca act gag ttt cga     260
Phe Gln Gln Gln Val Ile Ser Lys Ser Pro Leu Ser Thr Glu Phe Arg
```

```
            40                   45                   50

ggt aac agg tta aag gtg cag aaa aag aaa ata cct atg gaa aag aag      308
Gly Asn Arg Leu Lys Val Gln Lys Lys Lys Ile Pro Met Glu Lys Lys
        55                  60                  65

cgt gct ttt tct agt tct cct cat gct gta ctt acc act gat acc tct      356
Arg Ala Phe Ser Ser Ser Pro His Ala Val Leu Thr Thr Asp Thr Ser
    70                  75                  80

tct gag cta gca gaa aag ttc agt cta ggg ggg aat att gag cta cag      404
Ser Glu Leu Ala Glu Lys Phe Ser Leu Gly Gly Asn Ile Glu Leu Gln
85                  90                  95                  100

gtt gat gtt agg cct ccc act tca ggt gat gtg tcc ttt gtg gat ttt      452
Val Asp Val Arg Pro Pro Thr Ser Gly Asp Val Ser Phe Val Asp Phe
                105                 110                 115

caa gta aca aat ggt agt gat aaa ctg ttt ttg cac tgg ggg gca gta      500
Gln Val Thr Asn Gly Ser Asp Lys Leu Phe Leu His Trp Gly Ala Val
            120                 125                 130

aaa ttc ggg aaa gaa aca tgg tct ctt ccg aat gat cgt cca gat ggg      548
Lys Phe Gly Lys Glu Thr Trp Ser Leu Pro Asn Asp Arg Pro Asp Gly
        135                 140                 145

acc aaa gtg tac aag aac aaa gca ctt aga act cca ttt gtt aaa tct      596
Thr Lys Val Tyr Lys Asn Lys Ala Leu Arg Thr Pro Phe Val Lys Ser
    150                 155                 160

ggc tct aac tcc atc ctg aga ctg gag ata cga gac act gct atc gaa      644
Gly Ser Asn Ser Ile Leu Arg Leu Glu Ile Arg Asp Thr Ala Ile Glu
165                 170                 175                 180

gct att gag ttt ctc ata tac gat gaa gcc cac gat aaa tgg ata aag      692
Ala Ile Glu Phe Leu Ile Tyr Asp Glu Ala His Asp Lys Trp Ile Lys
                185                 190                 195

aat aat ggt ggt aat ttt cgt gtc aaa ttg tca aga aaa gag ata cga      740
Asn Asn Gly Gly Asn Phe Arg Val Lys Leu Ser Arg Lys Glu Ile Arg
            200                 205                 210

ggc cca gat gtt tct gtt cct gag gag ctt gta cag atc caa tca tat      788
Gly Pro Asp Val Ser Val Pro Glu Glu Leu Val Gln Ile Gln Ser Tyr
        215                 220                 225

ttg agg tgg gag agg aag gga aaa cag aat tac ccc cct gag aaa gag      836
Leu Arg Trp Glu Arg Lys Gly Lys Gln Asn Tyr Pro Pro Glu Lys Glu
    230                 235                 240
```

```
aag gag gaa tat gag gct gct cga act gtg cta cag gag gaa ata gct      884
Lys Glu Glu Tyr Glu Ala Ala Arg Thr Val Leu Gln Glu Glu Ile Ala
245                 250                 255                 260

cgt ggt gct tcc ata cag gac att cga gca agg cta aca aaa act aat      932
Arg Gly Ala Ser Ile Gln Asp Ile Arg Ala Arg Leu Thr Lys Thr Asn
                265                 270                 275

gat aaa agt caa agc aaa gaa gag cct ctt cat gta aca aag agt gat      980
Asp Lys Ser Gln Ser Lys Glu Glu Pro Leu His Val Thr Lys Ser Asp
            280                 285                 290

ata cct gat gac ctt gcc caa gca caa gct tac att agg tgg gag aaa     1028
Ile Pro Asp Asp Leu Ala Gln Ala Gln Ala Tyr Ile Arg Trp Glu Lys
        295                 300                 305

gca gga aag ccg aac tat cct cca gaa aag caa att gaa gaa ctc gaa     1076
Ala Gly Lys Pro Asn Tyr Pro Pro Glu Lys Gln Ile Glu Glu Leu Glu
    310                 315                 320

gaa gca aga aga gaa ttg caa ctt gag ctt gag aaa ggc att acc ctt     1124
Glu Ala Arg Arg Glu Leu Gln Leu Glu Leu Glu Lys Gly Ile Thr Leu
325                 330                 335                 340

gat gag ttg cgg aaa acg att aca aaa ggg gag ata aaa act aag gtg     1172
Asp Glu Leu Arg Lys Thr Ile Thr Lys Gly Glu Ile Lys Thr Lys Val
                345                 350                 355

gaa aag cac ctg aaa aga agt tct ttt gcc gtt gaa aga atc caa aga     1220
Glu Lys His Leu Lys Arg Ser Ser Phe Ala Val Glu Arg Ile Gln Arg
            360                 365                 370

aag aag aga gac ttt ggg cat ctt att aat aag tat act tcc agt cct     1268
Lys Lys Arg Asp Phe Gly His Leu Ile Asn Lys Tyr Thr Ser Ser Pro
        375                 380                 385

gca gta caa gta caa aag gtc ttg gaa gaa cca cca gcc tta tct aaa     1316
Ala Val Gln Val Gln Lys Val Leu Glu Glu Pro Pro Ala Leu Ser Lys
    390                 395                 400

att aag ctg tat gcc aag gag aag gag gag cag att gat gat ccg atc     1364
Ile Lys Leu Tyr Ala Lys Glu Lys Glu Glu Gln Ile Asp Asp Pro Ile
405                 410                 415                 420

cta aat aaa aag atc ttt aag gtc gat gat ggg gag cta ctg gta ctg     1412
Leu Asn Lys Lys Ile Phe Lys Val Asp Asp Gly Glu Leu Leu Val Leu
                425                 430                 435

gta gca aag tcc tct ggg aag aca aaa gta cat cta gct aca gat ctg     1460
Val Ala Lys Ser Ser Gly Lys Thr Lys Val His Leu Ala Thr Asp Leu
```

```
            440                 445                 450

aat cag cca att act ctt cac tgg gca tta tcc aaa agt cct gga gag      1508
Asn Gln Pro Ile Thr Leu His Trp Ala Leu Ser Lys Ser Pro Gly Glu
        455                 460                 465

tgg atg gta cca cct tca agc ata ttg cct cct ggg tca att att tta      1556
Trp Met Val Pro Pro Ser Ser Ile Leu Pro Pro Gly Ser Ile Ile Leu
    470                 475                 480

gac aag gct gcc gaa aca cct ttt tca gcc agt tct tct gat ggt cta      1604
Asp Lys Ala Ala Glu Thr Pro Phe Ser Ala Ser Ser Ser Asp Gly Leu
485                 490                 495                 500

act tct aag gta caa tct ttg gat ata gta att gaa gat ggc aat ttt      1652
Thr Ser Lys Val Gln Ser Leu Asp Ile Val Ile Glu Asp Gly Asn Phe
                505                 510                 515

gtg ggg atg cca ttt gtt ctt ttg tct ggt gaa aaa tgg att aag aac      1700
Val Gly Met Pro Phe Val Leu Leu Ser Gly Glu Lys Trp Ile Lys Asn
            520                 525                 530

caa ggg tcg gat ttc tat gtt ggc ttc agt gct gca tcc aaa tta gca      1748
Gln Gly Ser Asp Phe Tyr Val Gly Phe Ser Ala Ala Ser Lys Leu Ala
        535                 540                 545

ctc aag gct gct ggg gat ggc agt gga act gca aag tct tta ctg gat      1796
Leu Lys Ala Ala Gly Asp Gly Ser Gly Thr Ala Lys Ser Leu Leu Asp
    550                 555                 560

aaa ata gca gat atg gaa agt gag gct cag aag tca ttt atg cac cgg      1844
Lys Ile Ala Asp Met Glu Ser Glu Ala Gln Lys Ser Phe Met His Arg
565                 570                 575                 580

ttt aat att gca gct gac ttg ata gaa gat gcc act agt gct ggt gaa      1892
Phe Asn Ile Ala Ala Asp Leu Ile Glu Asp Ala Thr Ser Ala Gly Glu
                585                 590                 595

ctt ggt ttt gct gga att ctt gta tgg atg agg ttc atg gct aca agg      1940
Leu Gly Phe Ala Gly Ile Leu Val Trp Met Arg Phe Met Ala Thr Arg
            600                 605                 610

caa ctg ata tgg aac aaa aac tat aac gta aaa cca cgt gaa ata agc      1988
Gln Leu Ile Trp Asn Lys Asn Tyr Asn Val Lys Pro Arg Glu Ile Ser
        615                 620                 625

aag gct cag gac aga ctt aca gac ttg ttg cag aat gct ttc acc agt      2036
Lys Ala Gln Asp Arg Leu Thr Asp Leu Leu Gln Asn Ala Phe Thr Ser
    630                 635                 640
```

```
cac cct cag tac cgt gaa att ttg cgg atg att atg tca act gtt gga      2084
His Pro Gln Tyr Arg Glu Ile Leu Arg Met Ile Met Ser Thr Val Gly
645                 650                 655                 660

cgt gga ggt gaa ggg gat gta gga cag cga att agg gat gaa att ttg      2132
Arg Gly Gly Glu Gly Asp Val Gly Gln Arg Ile Arg Asp Glu Ile Leu
                665                 670                 675

gtc atc cag agg aac aat gac tgc aag ggt ggt atg atg caa gaa tgg      2180
Val Ile Gln Arg Asn Asn Asp Cys Lys Gly Gly Met Met Gln Glu Trp
            680                 685                 690

cat cag aaa ttg cat aat aat act agt cct gat gat gtt gtg atc tgt      2228
His Gln Lys Leu His Asn Asn Thr Ser Pro Asp Asp Val Val Ile Cys
        695                 700                 705

cag gca tta att gac tac atc aag agt gat ttt gat ctt ggt gtt tat      2276
Gln Ala Leu Ile Asp Tyr Ile Lys Ser Asp Phe Asp Leu Gly Val Tyr
    710                 715                 720

tgg aaa acc ctg aat gag aac gga ata aca aaa gag cgt ctt ttg agt      2324
Trp Lys Thr Leu Asn Glu Asn Gly Ile Thr Lys Glu Arg Leu Leu Ser
725                 730                 735                 740

tat gac cgt gct atc cat tct gaa cca aat ttt aga gga gat caa aag      2372
Tyr Asp Arg Ala Ile His Ser Glu Pro Asn Phe Arg Gly Asp Gln Lys
                745                 750                 755

ggt ggt ctt ttg cgt gat tta ggt cac tat atg aga aca ttg aag gca      2420
Gly Gly Leu Leu Arg Asp Leu Gly His Tyr Met Arg Thr Leu Lys Ala
            760                 765                 770

gtt cat tca ggt gca gat ctt gag tct gct att gca aac tgc atg ggc      2468
Val His Ser Gly Ala Asp Leu Glu Ser Ala Ile Ala Asn Cys Met Gly
        775                 780                 785

tac aaa act gag gga gaa ggc ttt atg gtt gga gtc cag ata aat cct      2516
Tyr Lys Thr Glu Gly Glu Gly Phe Met Val Gly Val Gln Ile Asn Pro
    790                 795                 800

gta tca ggc ttg cca tct ggc ttt cag gac ctc ctc cat ttt gtc tta      2564
Val Ser Gly Leu Pro Ser Gly Phe Gln Asp Leu Leu His Phe Val Leu
805                 810                 815                 820

gac cat gtg gaa gat aaa aat gtg gaa act ctt ctt gag aga ttg cta      2612
Asp His Val Glu Asp Lys Asn Val Glu Thr Leu Leu Glu Arg Leu Leu
                825                 830                 835

gag gct cgt gag gag ctt agg ccc ttg ctt ctc aaa cca aac aac cgt      2660
Glu Ala Arg Glu Glu Leu Arg Pro Leu Leu Leu Lys Pro Asn Asn Arg
```

840 845 850

cta aag gat ctg ctg ttt ttg gac ata gca ctt gat tct aca gtt aga 2708
Leu Lys Asp Leu Leu Phe Leu Asp Ile Ala Leu Asp Ser Thr Val Arg
855 860 865

aca gca gta gaa agg gga tat gaa gaa ttg aac aac gct aat cct gag 2756
Thr Ala Val Glu Arg Gly Tyr Glu Glu Leu Asn Asn Ala Asn Pro Glu
870 875 880

aaa atc atg tac ttc atc tcc ctc gtt ctt gaa aat ctc gca ctc tct 2804
Lys Ile Met Tyr Phe Ile Ser Leu Val Leu Glu Asn Leu Ala Leu Ser
885 890 895 900

gtg gac gat aat gaa gat ctt gtt tat tgc ttg aag gga tgg aat caa 2852
Val Asp Asp Asn Glu Asp Leu Val Tyr Cys Leu Lys Gly Trp Asn Gln
905 910 915

gct ctt tca atg tcc aat ggt ggg gac aac cat tgg gct tta ttt gca 2900
Ala Leu Ser Met Ser Asn Gly Gly Asp Asn His Trp Ala Leu Phe Ala
920 925 930

aaa gct gtg ctt gac aga acc cgt ctt gca ctt gca agc aag gca gag 2948
Lys Ala Val Leu Asp Arg Thr Arg Leu Ala Leu Ala Ser Lys Ala Glu
935 940 945

tgg tac cat cac tta ttg cag cca tct gcc gaa tat cta gga tca ata 2996
Trp Tyr His His Leu Leu Gln Pro Ser Ala Glu Tyr Leu Gly Ser Ile
950 955 960

ctt ggg gtg gac caa tgg gct ttg aac ata ttt act gaa gaa att ata 3044
Leu Gly Val Asp Gln Trp Ala Leu Asn Ile Phe Thr Glu Glu Ile Ile
965 970 975 980

cgt gct gga tca gca gct tca tta tcc tct ctt ctt aat aga ctc gat 3092
Arg Ala Gly Ser Ala Ala Ser Leu Ser Ser Leu Leu Asn Arg Leu Asp
985 990 995

ccc gtg ctt cgg aaa act gca aat cta gga agt tgg cag att atc 3137
Pro Val Leu Arg Lys Thr Ala Asn Leu Gly Ser Trp Gln Ile Ile
1000 1005 1010

agt cca gtt gaa gcc gtt gga tat gtt gtc gtt gtg gat gag ttg 3182
Ser Pro Val Glu Ala Val Gly Tyr Val Val Val Val Asp Glu Leu
1015 1020 1025

ctt tca gtt cag aat gaa atc tac gag aag ccc acg atc tta gta 3227
Leu Ser Val Gln Asn Glu Ile Tyr Glu Lys Pro Thr Ile Leu Val
1030 1035 1040

```
gca aaa tct gtt  aaa gga gag gag gaa  att cct gat ggt gct  gtt      3272
Ala Lys Ser Val  Lys Gly Glu Glu Glu  Ile Pro Asp Gly Ala  Val
            1045                 1050                 1055

gcc ctg ata aca  cca gac atg cca gat  gtt ctt tca cat gtt  tct      3317
Ala Leu Ile Thr  Pro Asp Met Pro Asp  Val Leu Ser His Val  Ser
            1060                 1065                 1070

gtt cga gct aga  aat ggg aag gtt tgc  ttt gct aca tgc ttt  gat      3362
Val Arg Ala Arg  Asn Gly Lys Val Cys  Phe Ala Thr Cys Phe  Asp
            1075                 1080                 1085

ccc aat ata ttg  gct gac ctc caa gca  aag gaa gga agg att  ttg      3407
Pro Asn Ile Leu  Ala Asp Leu Gln Ala  Lys Glu Gly Arg Ile  Leu
            1090                 1095                 1100

ctc tta aag cct  aca cct tca gac ata  atc tat agt gag gtg  aat      3452
Leu Leu Lys Pro  Thr Pro Ser Asp Ile  Ile Tyr Ser Glu Val  Asn
            1105                 1110                 1115

gag att gag ctc  caa agt tca agt aac  ttg gta gaa gct gaa  act      3497
Glu Ile Glu Leu  Gln Ser Ser Ser Asn  Leu Val Glu Ala Glu  Thr
            1120                 1125                 1130

tca gca aca ctt  aga ttg gtg aaa aag  caa ttt ggt ggt tgt  tac      3542
Ser Ala Thr Leu  Arg Leu Val Lys Lys  Gln Phe Gly Gly Cys  Tyr
            1135                 1140                 1145

gca ata tca gca  gat gaa ttc aca agt  gaa atg gtt gga gct  aaa      3587
Ala Ile Ser Ala  Asp Glu Phe Thr Ser  Glu Met Val Gly Ala  Lys
            1150                 1155                 1160

tca cgt aat att  gca tat ctg aaa gga  aaa gtg cct tcc tcg  gtg      3632
Ser Arg Asn Ile  Ala Tyr Leu Lys Gly  Lys Val Pro Ser Ser  Val
            1165                 1170                 1175

gga att cct acg  tca gta gct ctt cca  ttt gga gtc ttt gag  aaa      3677
Gly Ile Pro Thr  Ser Val Ala Leu Pro  Phe Gly Val Phe Glu  Lys
            1180                 1185                 1190

gta ctt tca gac  gac ata aat cag gga  gtg gca aaa gag ttg  caa      3722
Val Leu Ser Asp  Asp Ile Asn Gln Gly  Val Ala Lys Glu Leu  Gln
            1195                 1200                 1205

att ctg atg aaa  aaa cta tct gaa gga  gac ttc agc gct ctt  ggt      3767
Ile Leu Met Lys  Lys Leu Ser Glu Gly  Asp Phe Ser Ala Leu  Gly
            1210                 1215                 1220

gaa att cgc aca  acg gtt tta gat ctt  tca gca cca gct caa  ttg      3812
Glu Ile Arg Thr  Thr Val Leu Asp Leu  Ser Ala Pro Ala Gln  Leu
```

```
                1225                1230                1235

gtc aaa gag ctg  aag gag aag atg cag  ggt tct ggc atg cct  tgg      3857
Val Lys Glu Leu  Lys Glu Lys Met Gln  Gly Ser Gly Met Pro  Trp
                1240                1245                1250

cct ggt gat gaa  ggt cca aag cgg tgg  gaa caa gca tgg atg  gcc      3902
Pro Gly Asp Glu  Gly Pro Lys Arg Trp  Glu Gln Ala Trp Met  Ala
                1255                1260                1265

ata aaa aag gtg  tgg gct tca aaa tgg  aat gag aga gca tac  ttc      3947
Ile Lys Lys Val  Trp Ala Ser Lys Trp  Asn Glu Arg Ala Tyr  Phe
                1270                1275                1280

agc aca agg aag  gtg aaa ctg gat cat  gac tat ctg tgc atg  gct      3992
Ser Thr Arg Lys  Val Lys Leu Asp His  Asp Tyr Leu Cys Met  Ala
                1285                1290                1295

gtc ctt gtt caa  gaa ata ata aat gct  gat tat gca ttt gtc  att      4037
Val Leu Val Gln  Glu Ile Ile Asn Ala  Asp Tyr Ala Phe Val  Ile
                1300                1305                1310

cac aca acc aac  cca tct tcc gga gac  gac tca gaa ata tat  gcc      4082
His Thr Thr Asn  Pro Ser Ser Gly Asp  Asp Ser Glu Ile Tyr  Ala
                1315                1320                1325

gag gtg gtc agg  ggc ctt ggg gaa aca  ctt gtt gga gct tat  cca      4127
Glu Val Val Arg  Gly Leu Gly Glu Thr  Leu Val Gly Ala Tyr  Pro
                1330                1335                1340

gga cgt gct ttg  agt ttt atc tgc aag  aaa aag gat ctc aac  tct      4172
Gly Arg Ala Leu  Ser Phe Ile Cys Lys  Lys Lys Asp Leu Asn  Ser
                1345                1350                1355

cct caa gtg tta  ggt tac cca agc aaa  ccg atc ggc ctt ttc  ata      4217
Pro Gln Val Leu  Gly Tyr Pro Ser Lys  Pro Ile Gly Leu Phe  Ile
                1360                1365                1370

aaa aga tct atc  atc ttc cga tct gat  tcc aat ggg gaa gat  ttg      4262
Lys Arg Ser Ile  Ile Phe Arg Ser Asp  Ser Asn Gly Glu Asp  Leu
                1375                1380                1385

gaa ggt tat gcc  ggt gct ggc ctc tac  gac agt gta cca atg  gat      4307
Glu Gly Tyr Ala  Gly Ala Gly Leu Tyr  Asp Ser Val Pro Met  Asp
                1390                1395                1400

gag gag gaa aaa  gtt gta att gat tac  tct tcc gac cca ttg  ata      4352
Glu Glu Glu Lys  Val Val Ile Asp Tyr  Ser Ser Asp Pro Leu  Ile
                1405                1410                1415
```

```
act gat ggt aac  ttc cgc cag aca atc  ctg tcc aac att gct  cgt      4397
Thr Asp Gly Asn  Phe Arg Gln Thr Ile  Leu Ser Asn Ile Ala  Arg
            1420                 1425                 1430

gct gga cat gct  atc gag gag cta tat  ggc tct cct caa gac  att      4442
Ala Gly His Ala  Ile Glu Glu Leu Tyr  Gly Ser Pro Gln Asp  Ile
            1435                 1440                 1445

gag ggt gta gtg  agg gat gga aag att  tat gtc gtt cag aca  aga      4487
Glu Gly Val Val  Arg Asp Gly Lys Ile  Tyr Val Val Gln Thr  Arg
            1450                 1455                 1460

cca cag atg tga ttatattctc gttgtatgtt gttcagagaa gaccacagat         4539
Pro Gln Met


gtgatcatat tctcattgta tcagatctgt gaccacttac ctgatacctc ccatgaagtt   4599

acctgtatga ttatacgtga tccaaagcca tcacatcatg ttcaccttca gctattggag   4659

gagaagtgag aagtaggaat tgcaatatga ggaataataa gaaaaacttt gtaaaagcta   4719

aattagctgg gtatgatata gggagaaatg tgtaaacatt gtactatata tagtatatac   4779

acacgcatta tgtattgcat tatgcactga ataatatcgc agcatcaaag aagaaatcct   4839

ttgggtggtt tc                                                       4851
```

<210> 2
<211> 1464
<212> PRT
<213> Solanum tuberosum

<400> 2

```
Met Ser Asn Ser Leu Gly Asn Asn Leu Leu Tyr Gln Gly Phe Leu Thr
1               5                   10                  15

Ser Thr Val Leu Glu His Lys Ser Arg Ile Ser Pro Pro Cys Val Gly
            20                  25                  30

Gly Asn Ser Leu Phe Gln Gln Gln Val Ile Ser Lys Ser Pro Leu Ser
        35                  40                  45

Thr Glu Phe Arg Gly Asn Arg Leu Lys Val Gln Lys Lys Lys Ile Pro
    50                  55                  60
```

```
Met Glu Lys Lys Arg Ala Phe Ser Ser Ser Pro His Ala Val Leu Thr
65                  70                  75                  80

Thr Asp Thr Ser Ser Glu Leu Ala Glu Lys Phe Ser Leu Gly Gly Asn
                85                  90                  95

Ile Glu Leu Gln Val Asp Val Arg Pro Pro Thr Ser Gly Asp Val Ser
            100                 105                 110

Phe Val Asp Phe Gln Val Thr Asn Gly Ser Asp Lys Leu Phe Leu His
        115                 120                 125

Trp Gly Ala Val Lys Phe Gly Lys Glu Thr Trp Ser Leu Pro Asn Asp
    130                 135                 140

Arg Pro Asp Gly Thr Lys Val Tyr Lys Asn Lys Ala Leu Arg Thr Pro
145                 150                 155                 160

Phe Val Lys Ser Gly Ser Asn Ser Ile Leu Arg Leu Glu Ile Arg Asp
                165                 170                 175

Thr Ala Ile Glu Ala Ile Glu Phe Leu Ile Tyr Asp Glu Ala His Asp
            180                 185                 190

Lys Trp Ile Lys Asn Asn Gly Gly Asn Phe Arg Val Lys Leu Ser Arg
        195                 200                 205

Lys Glu Ile Arg Gly Pro Asp Val Ser Val Pro Glu Glu Leu Val Gln
    210                 215                 220

Ile Gln Ser Tyr Leu Arg Trp Glu Arg Lys Gly Lys Gln Asn Tyr Pro
225                 230                 235                 240

Pro Glu Lys Glu Lys Glu Glu Tyr Glu Ala Ala Arg Thr Val Leu Gln
                245                 250                 255
```

Glu Glu Ile Ala Arg Gly Ala Ser Ile Gln Asp Ile Arg Ala Arg Leu
260 265 270

Thr Lys Thr Asn Asp Lys Ser Gln Ser Lys Glu Glu Pro Leu His Val
275 280 285

Thr Lys Ser Asp Ile Pro Asp Asp Leu Ala Gln Ala Gln Ala Tyr Ile
290 295 300

Arg Trp Glu Lys Ala Gly Lys Pro Asn Tyr Pro Pro Glu Lys Gln Ile
305 310 315 320

Glu Glu Leu Glu Glu Ala Arg Arg Glu Leu Gln Leu Glu Leu Glu Lys
325 330 335

Gly Ile Thr Leu Asp Glu Leu Arg Lys Thr Ile Thr Lys Gly Glu Ile
340 345 350

Lys Thr Lys Val Glu Lys His Leu Lys Arg Ser Ser Phe Ala Val Glu
355 360 365

Arg Ile Gln Arg Lys Lys Arg Asp Phe Gly His Leu Ile Asn Lys Tyr
370 375 380

Thr Ser Ser Pro Ala Val Gln Val Gln Lys Val Leu Glu Glu Pro Pro
385 390 395 400

Ala Leu Ser Lys Ile Lys Leu Tyr Ala Lys Glu Lys Glu Glu Gln Ile
405 410 415

Asp Asp Pro Ile Leu Asn Lys Lys Ile Phe Lys Val Asp Asp Gly Glu
420 425 430

Leu Leu Val Leu Val Ala Lys Ser Ser Gly Lys Thr Lys Val His Leu
435 440 445

Ala Thr Asp Leu Asn Gln Pro Ile Thr Leu His Trp Ala Leu Ser Lys
450 455 460

Ser Pro Gly Glu Trp Met Val Pro Pro Ser Ser Ile Leu Pro Pro Gly
465 470 475 480

Ser Ile Ile Leu Asp Lys Ala Ala Glu Thr Pro Phe Ser Ala Ser Ser
485 490 495

Ser Asp Gly Leu Thr Ser Lys Val Gln Ser Leu Asp Ile Val Ile Glu
500 505 510

Asp Gly Asn Phe Val Gly Met Pro Phe Val Leu Leu Ser Gly Glu Lys
515 520 525

Trp Ile Lys Asn Gln Gly Ser Asp Phe Tyr Val Gly Phe Ser Ala Ala
530 535 540

Ser Lys Leu Ala Leu Lys Ala Ala Gly Asp Gly Ser Gly Thr Ala Lys
545 550 555 560

Ser Leu Leu Asp Lys Ile Ala Asp Met Glu Ser Glu Ala Gln Lys Ser
565 570 575

Phe Met His Arg Phe Asn Ile Ala Ala Asp Leu Ile Glu Asp Ala Thr
580 585 590

Ser Ala Gly Glu Leu Gly Phe Ala Gly Ile Leu Val Trp Met Arg Phe
595 600 605

Met Ala Thr Arg Gln Leu Ile Trp Asn Lys Asn Tyr Asn Val Lys Pro
610 615 620

Arg Glu Ile Ser Lys Ala Gln Asp Arg Leu Thr Asp Leu Leu Gln Asn
625 630 635 640

Ala Phe Thr Ser His Pro Gln Tyr Arg Glu Ile Leu Arg Met Ile Met
645 650 655

Ser Thr Val Gly Arg Gly Gly Glu Gly Asp Val Gly Gln Arg Ile Arg
660 665 670

Asp Glu Ile Leu Val Ile Gln Arg Asn Asn Asp Cys Lys Gly Gly Met
675 680 685

Met Gln Glu Trp His Gln Lys Leu His Asn Asn Thr Ser Pro Asp Asp
690 695 700

Val Val Ile Cys Gln Ala Leu Ile Asp Tyr Ile Lys Ser Asp Phe Asp
705 710 715 720

Leu Gly Val Tyr Trp Lys Thr Leu Asn Glu Asn Gly Ile Thr Lys Glu
725 730 735

Arg Leu Leu Ser Tyr Asp Arg Ala Ile His Ser Glu Pro Asn Phe Arg
740 745 750

Gly Asp Gln Lys Gly Gly Leu Leu Arg Asp Leu Gly His Tyr Met Arg
755 760 765

Thr Leu Lys Ala Val His Ser Gly Ala Asp Leu Glu Ser Ala Ile Ala
770 775 780

Asn Cys Met Gly Tyr Lys Thr Glu Gly Glu Gly Phe Met Val Gly Val
785 790 795 800

Gln Ile Asn Pro Val Ser Gly Leu Pro Ser Gly Phe Gln Asp Leu Leu
805 810 815

His Phe Val Leu Asp His Val Glu Asp Lys Asn Val Glu Thr Leu Leu
820 825 830

Glu Arg Leu Leu Glu Ala Arg Glu Glu Leu Arg Pro Leu Leu Leu Lys
835 840 845

Pro Asn Asn Arg Leu Lys Asp Leu Leu Phe Leu Asp Ile Ala Leu Asp
850 855 860

```
Ser Thr Val Arg Thr Ala Val Glu Arg Gly Tyr Glu Glu Leu Asn Asn
865                 870                 875                 880

Ala Asn Pro Glu Lys Ile Met Tyr Phe Ile Ser Leu Val Leu Glu Asn
                885                 890                 895

Leu Ala Leu Ser Val Asp Asp Asn Glu Asp Leu Val Tyr Cys Leu Lys
            900                 905                 910

Gly Trp Asn Gln Ala Leu Ser Met Ser Asn Gly Gly Asp Asn His Trp
        915                 920                 925

Ala Leu Phe Ala Lys Ala Val Leu Asp Arg Thr Arg Leu Ala Leu Ala
    930                 935                 940

Ser Lys Ala Glu Trp Tyr His His Leu Leu Gln Pro Ser Ala Glu Tyr
945                 950                 955                 960

Leu Gly Ser Ile Leu Gly Val Asp Gln Trp Ala Leu Asn Ile Phe Thr
                965                 970                 975

Glu Glu Ile Ile Arg Ala Gly Ser Ala Ala Ser Leu Ser Ser Leu Leu
            980                 985                 990

Asn Arg Leu Asp Pro Val Leu Arg  Lys Thr Ala Asn Leu  Gly Ser Trp
        995                 1000                 1005

Gln Ile  Ile Ser Pro Val Glu  Ala Val Gly Tyr Val  Val Val Val
    1010                 1015                 1020

Asp Glu  Leu Leu Ser Val Gln  Asn Glu Ile Tyr Glu  Lys Pro Thr
    1025                 1030                 1035

Ile Leu  Val Ala Lys Ser Val  Lys Gly Glu Glu Glu  Ile Pro Asp
    1040                 1045                 1050
```

Gly Ala Val Ala Leu Ile Thr Pro Asp Met Pro Asp Val Leu Ser
1055 1060 1065

His Val Ser Val Arg Ala Arg Asn Gly Lys Val Cys Phe Ala Thr
1070 1075 1080

Cys Phe Asp Pro Asn Ile Leu Ala Asp Leu Gln Ala Lys Glu Gly
1085 1090 1095

Arg Ile Leu Leu Leu Lys Pro Thr Pro Ser Asp Ile Ile Tyr Ser
1100 1105 1110

Glu Val Asn Glu Ile Glu Leu Gln Ser Ser Ser Asn Leu Val Glu
1115 1120 1125

Ala Glu Thr Ser Ala Thr Leu Arg Leu Val Lys Lys Gln Phe Gly
1130 1135 1140

Gly Cys Tyr Ala Ile Ser Ala Asp Glu Phe Thr Ser Glu Met Val
1145 1150 1155

Gly Ala Lys Ser Arg Asn Ile Ala Tyr Leu Lys Gly Lys Val Pro
1160 1165 1170

Ser Ser Val Gly Ile Pro Thr Ser Val Ala Leu Pro Phe Gly Val
1175 1180 1185

Phe Glu Lys Val Leu Ser Asp Asp Ile Asn Gln Gly Val Ala Lys
1190 1195 1200

Glu Leu Gln Ile Leu Met Lys Lys Leu Ser Glu Gly Asp Phe Ser
1205 1210 1215

Ala Leu Gly Glu Ile Arg Thr Thr Val Leu Asp Leu Ser Ala Pro
1220 1225 1230

Ala Gln Leu Val Lys Glu Leu Lys Glu Lys Met Gln Gly Ser Gly
1235 1240 1245

Met Pro Trp Pro Gly Asp Glu Gly Pro Lys Arg Trp Glu Gln Ala
1250 1255 1260

Trp Met Ala Ile Lys Lys Val Trp Ala Ser Lys Trp Asn Glu Arg
1265 1270 1275

Ala Tyr Phe Ser Thr Arg Lys Val Lys Leu Asp His Asp Tyr Leu
1280 1285 1290

Cys Met Ala Val Leu Val Gln Glu Ile Ile Asn Ala Asp Tyr Ala
1295 1300 1305

Phe Val Ile His Thr Thr Asn Pro Ser Ser Gly Asp Asp Ser Glu
1310 1315 1320

Ile Tyr Ala Glu Val Val Arg Gly Leu Gly Glu Thr Leu Val Gly
1325 1330 1335

Ala Tyr Pro Gly Arg Ala Leu Ser Phe Ile Cys Lys Lys Lys Asp
1340 1345 1350

Leu Asn Ser Pro Gln Val Leu Gly Tyr Pro Ser Lys Pro Ile Gly
1355 1360 1365

Leu Phe Ile Lys Arg Ser Ile Ile Phe Arg Ser Asp Ser Asn Gly
1370 1375 1380

Glu Asp Leu Glu Gly Tyr Ala Gly Ala Gly Leu Tyr Asp Ser Val
1385 1390 1395

Pro Met Asp Glu Glu Glu Lys Val Val Ile Asp Tyr Ser Ser Asp
1400 1405 1410

Pro Leu Ile Thr Asp Gly Asn Phe Arg Gln Thr Ile Leu Ser Asn
1415 1420 1425

```
Ile Ala  Arg Ala Gly His Ala  Ile Glu Glu Leu Tyr  Gly Ser Pro
    1430                 1435                 1440

Gln Asp  Ile Glu Gly Val Val  Arg Asp Gly Lys Ile  Tyr Val Val
    1445                 1450                 1455

Gln Thr  Arg Pro Gln Met
    1460
```

## Description

The present invention relates to the use of modified wheat flour for reducing baking losses without use of baking agents.

The quality of baked goods is effected by a plurality of factors: the raw materials and formulas; bulk proof, workup and also fermentation and baking conditions.

The choice of wheat variety has a great effect on the features of baking quality such as protein content and wet gluten content, baked volume and sedimentation value.

Baking loss (also termed bakeout loss) is taken to mean by those skilled in the art the weight loss of the dough or dough pieces during baking. Primarily this is evaporated dough water and also, to a minimal extent, other volatile constituents such as alcohol, organic acids and esters; therefore, those skilled in the art equally speak of "water loss".

The baking loss proceeds in parallel to the temperature course in the dough piece during baking in that it is greatest in the edge regions (crust), because there the highest temperature prevails. In addition, the baking loss is greatly dependent on the baked good's size or the baked good's surface area. Relatively small baked goods, percentagewise, have a greater baking loss than larger baked goods. In addition to the size and shape of the bakery product, other factors also have an effect: for example dough processing and bulk proof, the crust fraction, baking time and oven temperature.

The mean baking losses are, for small baked goods, 18-22%, for 1000 g bread 13%, and for 2000 g bread 11 %.

High baking losses have a disadvantageous effect on the baking yield of the baker and thus also on the weight and number of baked goods to be sold.

In addition, the water losses during the baking process have a disadvantageous effect on the freshness of the baked goods, which they thereby age earlier, that is to say stale.

This in turn impairs the flavor of the baked goods and thus what is termed "mouthfeel".

Therefore there is a great need to reduce the baking losses in the production of dough products and to enhance properties such as improved flavor, improved mouthfeel and also the baking yield of the baker.

The present invention relates to the use of wheat flour having a phosphate content of at least 2 $\mu$mol of C-6-P/g of starch for reducing baking losses.

The expression "phosphate content", in the context of the present invention, is taken to mean the content of phosphate groups which are bound at carbon atom position "6" of the glucose monomers of the flour. In principle, in starch, in vivo, positions C2, C3 and C6 of the glucose units can be phosphorylated. The phosphate content in the C6 position (= C-6-P content) is determined, in the context of the present invention, via glucose-6-phosphate determination using the optical-enzymatic test described hereinafter (according to Nielsen et al., 1994, Plant Physiol. 105, 111-117).

The expression "phosphate content of at least 2/$\mu$mol of C-6-P/g of starch", in the context of the present invention, means that the content of phosphate groups which are bound at carbon atom position "6" of the glucose monomers is at least 2 $\mu$mol per gram of starch.

In a further embodiment, the flour used is modified in such a manner that the phosphate content is at least 2 $\mu$mol of C-6-phosphate/g of starch. In a preferred embodiment, the flour has a content of 2 to 10 $\mu$mol of C-6-phosphate/g of starch, particularly preferably 2 to 8 $\mu$mol of C-6-phosphate/g of starch, and very particularly preferably 4 to 6 $\mu$mol of C-6-phosphate/g of starch.

Wheat flour can have its phosphate content modified by various processes, this can be achieved, for example, by genetic modification of the wheat plant, or by means of chemical phosphorylation of the extracted starch.

In a preferred used, the wheat flour underlying the invention was modified. In a particularly preferred embodiment, the wheat flour underlying the invention was genetically modified. In the context of the present invention, "genetically modified wheat flour" means that the wheat flour originates from grains of a genetically modified wheat plant, its genetic modification leading to increase in the phosphate content of the starch compared with the phosphate content of a corresponding genetically unmodified wheat plant. In unmodified wheat flour, phosphate is not detectable in the starch at all, or only in traces.

In a further preferred use, wheat plants were used which express an R1 gene (alpha-glucan water dikinase, E.C.2.7.9.4; Lorberth et al. (1998) Nature Biotechnology 16: 473-477) from potato (*Solanum tuberosum*). The nucleotide sequences and amino acid sequences are reported in Seq ID No. 1 and Seq ID No. 2. The production of these plants is described extensively in the patent application WO 02/34923 (examples 1 and 2).

In a further preferred embodiment, the starch of the wheat flour underlying the invention was phosphorylated by chemical agents; this phosphorylation caused an increase of the phosphate content compared with the phosphate content of a corresponding wheat plant which was not chemically phosphorylated.

In baking processes, the addition of baking agents is a conventional procedure. Baking agents are taken to mean by those skilled in the art all substances which (are said to) cause an improvement in volume, yield, flavor, freshness retention and/or dough processing. Conventional baking agents are, for example, soy flour, xanthan, carboxymethylcellulose or pectins. These baking agents can also be used to reduce baking losses. However, their use gives rise to additional costs and requires in most cases a more or less complex adaptation of the dough processing and baking

processes. In addition, it is required under food law to declare these baking agents as additives.

Soy is added as soy flour or as soy lecithin. Soy lecithin acts as an emulsifier, whereas improved water binding is described for soy powder. The addition of soy flour to wheat flour has been studied, inter alia, by Stauffer (2002, American Soybean Association, Europe and Maghreb). He describes a reduction of baking losses by 0.5 to 1.5% on addition of 3 to 5% of soy powder to wheat flour.

Xanthan (E415) is a naturally occurring polysaccharide which is produced in a biotechnological process by means of fermentation of glucose or sucrose by the bacterium *Xanthomonas campestris.* It is usable in versatile ways, for instance as thickener and stabilizer in the food and construction material industries and also for emulsions in paints and cosmetics. In the food industry it is also used as gluten substitute, inter alia in yeast-raised baked goods. Sidhu and Bawa 2002 (Int. Journal of Food Properties 5(1): 1-11) write that the addition of 0.2% xanthan to wheat flour increased the water absorption from 59 to 60.8%, the addition of 0.5% xanthan to 62%. The dough yield increased by 0.4-2.9% (addition of 0.1 and 0.5% xanthan) and the bread yield by 0.7-2.0%. Additions of greater than 0.3% xanthan, however, according to statements of the authors were accompanied with decreasing bread quality ("slightly gummy").

Pectins (E440) are polysaccharides which are obtained from plants (apple pomace, beet cossettes, citrus peel) and are used as gelling agents and also as dietary fiber. Yaseen et al. (2001, Polish J. of Food and Nutrition Sc. 10/51 (4): 19-25) describe the effect of pectins as antistaling agents of bread. According to their studies, the addition of 1-2% pectin gave a reduction of baking losses by 1-1.5%, a fraction >1.5% pectin rather having an adverse effect on volume and stability of the breads.

Carboxymethylcellulose (= CMC; E466) is structurally chemically modified crystals of plant fibers, that is to say cellulose treated with lyes or chloroacetic acid. CMC is used inter alia as gelling and thickening agent and also water retention system and thus serves to prolong the freshness of foods. Sidhu and Bawa (2000, Int. Journal of Food Properties, 3(3): 407-419) observed an increase of water absorption from 1.4 to 8.6% compared with the control for an addition of 0.1 to 0.5% CMC to wheat flour. The specific volume and additional yield increased by 0.7 to 3.3%, the yields which were higher than 1%, being achieved with an addition of >0.3% CMC, but, according to statements by the authors, this was accompanied with a decreasing bread quality ("slightly gummy").

In a preferred embodiment, in the use according to the invention the wheat flour comprises a genetically modified starch.

In a further embodiment, use is made of wheat flour having a phosphate content of at least 2 μmol of C-6-P/g of starch for reducing baking losses without simultaneous use of baking agents which reduce baking losses.

In a preferred embodiment, use is made of modified wheat flour, very particularly preferably of genetically modified wheat flour.

In a further embodiment, in the use according to the invention the flour used comprises a mixture of various flours, this flour mixture having a phosphate content of at least 2 μmol of C-6-P/g of starch.

In a preferred embodiment, the mixture is a mixture of at least one modified flour with at least one unmodified flour.

In a further preferred embodiment, in the composition according to the invention the flour used is composed of two or more different modified flours.

In a further preferred embodiment, the modified flours are genetically modified flours.

The use of flours which are composed of qualitatively different flours is absolutely customary for baking processes. Depending on end product, the mixture can be a mixture of (qualitatively) different wheat flours or a mixture of wheat flour with other flours or starch from other plants, for example cornstarch. Customarily, the flour mixture for the baker is already composed in the cereal mill.

"Baker" is in this context any type of enterprise which processes flour to bakery products. "Cereal mill" is to be taken to mean a mechanically operated milling plant in which cereal is processed to flour.

Surprisingly, it has been found that in the use according to the invention the baking loss as weight loss after the baking process in baked goods from modified wheat flour is lower by 0.1 to 10% than in baked goods which were produced from unmodified wheat flour.

In further advantageous embodiments, the weight loss is reduced by 0.1 to 8%, preferably by 0.2 to 5%, particularly preferably by 0.5 to 3%, and very particularly preferably by 1.0 to 2.5%.

"Weight loss" is taken to mean by those skilled in the art the baking loss during baking due to water evaporation. The weight loss (= baking loss) is based in principe on the dough weight and is the ratio of dough weight to bread weight. It is calculated as follows:

$$\text{baking loss} = \frac{\text{dough weight} - \text{bread weight}}{\text{dough weight}} \times 100$$

It was found that the weight loss of baked goods made from genetically modified wheat flour is lower as a percentage than in baked goods made from unmodified wheat flour; this was found most clearly in the case of baguettes

(14.1 to 16.1%).

In the context of the present invention, the expression "baked goods" is to be taken to mean a broad term for dough pieces which can be in different "states", that is unbaked, prebaked or end-baked.

Those skilled in the art take an unbaked dough to mean a dough for production of baked goods (for example rolls), which comprises all required ingredients, or already formed dough pieces therefrom, which have not yet been baked (what are called unbaked dough pieces). In contrast thereto, a prebaked dough is taken to mean dough pieces which for improved storage or for simplification for the consumer, have passed through a first baking procedure (which can absolutely comprise a plurality of steps) at the manufacturer's premises under defined conditions. For completion, a further baking operation is required by the final consumer. End-baked dough pieces are those which are sold by the specialist trade correspondingly freshly baked or are produced by the consumers themselves by a final baking operation of prebaked dough pieces.

In the context of the present invention, all baked goods (rolls, white pan bread (= WPB), baguettes, hamburger buns) which were produced from the genetically modified wheat flour described here (= TAAB) are termed, for linguistic simplification, by the collective expression <u>TAAB baked goods</u>.

In contrast thereto, wild type baked goods are taken to mean those which are produced from corresponding genetically unmodified flour (= wild type flour).

The expression "corresponding", in the context of the present invention, means that on comparison of a plurality of articles, the articles in question which are being compared with one another, were held under the same conditions. In this context, the expression "corresponding" means that the baked goods which are compared with one another were produced and tested under the same conditions. With respect to the flour used, the expression "corresponding" means that the plants from which the flour used was ultimately obtained, were grown under the same cultivation conditions.

The expression "wild type wheat flour", in the context of the present invention, means that this is flour which was produced from cereal from unmodified wild type wheat plants. These wheat plants serve as starting material for those wheat plants which were genetically modified for the use according to the invention; that is their genetic information, apart from the genetic modification introduced which leads to an increase in the phosphate content, corresponds to that of a genetically modified wheat plant.

A further use of the present invention is that the baking loss as water loss after the baking process is lower by 1 to 20% than in baked goods which were produced from unmodified wheat flour.

In further advantageous embodiments, the water loss is reduced by 1.0 to 15%, preferably by 1.5 to 10%, particularly preferably by 2 to 8%, and very particular preferably by 2 to 5%.

Water loss (% water loss based on the water in the dough), in the context of the present invention, is taken to mean the liquid loss which occurred after the baking process.

For the production of dough from genetically modified flour or dough from unmodified (wild type) flour, differing amounts of water were added to the same amount of flour in order finally to obtain the same dough consistency. The unbaked dough pieces produced have the same weight, but contain different amounts of water. The dough consistency was measured using the farinograph (ICC standard 115/1) as described hereinafter in the method part.

Basing the above-described weight loss (= baking loss due to water evaporation) on the amount of water present in the dough, the actual percentage water loss can be calculated:

$$\text{water loss (\%)} = \frac{\text{dough weight} - \text{bread weight}}{\text{dough water}} \times 100$$

Surprisingly, the results of the present invention show a significant reduction of baking losses even without addition of baking agents. The water loss based on the water present in the dough was lower for all baked goods made from modified TAAB wheat flour than for the corresponding wild type baked goods. The water loss was most greatly decreased in the baguettes: whereas the wild type baguettes exhibited a water loss of 35.1 %, in the TAAB baguettes it was only 30.1 and in the rolls 45.1 %, compared with 46.9% for the wild type.

Thus the present invention stands out significantly from the reported studies with additives, that is the baking losses in the present invention are significantly lower.

In addition, surprisingly, in the use according to the invention it was found that the TAAB baked goods have an increased bread moisture. An increased bread moisture has a beneficial effect on longer freshness retention and a good flavor of the baked good. The bread moisture is dependent on the type of the baked good and on the baking process.

The moisture of the baked goods is calculated after drying as follows:

$$\text{moisture (\%)} = \frac{\text{initial weight} - \text{end weight}}{\text{initial weight}} \times 100$$

In the case of the use according to the invention, bread moisture is taken to mean the water content of the entire baked good, that is no distinction is made between crumb and crust; the latter obviously has a lower moisture than the crumb. Ideally, the bread moisture is increased by 0.5 to 5%. In a preferred embodiment, the bread moisture of the TAAB baked goods is increased by 1 to 5%, particularly preferably by 1.5 to 4%, and very particularly preferably by 1.5 to 3%.

In a further preferred embodiment, in the use according to the invention the wheat flour comprises a genetically modified starch.

The expression "genetically modified starch", in the present invention, designates a wheat starch which was modified with respect to its phosphate content using genetic engineering methods in such a manner that, compared with wheat starch from genetically unmodified wild type plants, it has an increased phosphate content. For this, the R1 gene from potato (*Solanum tuberosum*) was transformed into wheat (*Triticum aestivum*), as described in WO 02/034923.

In a further embodiment, the genetically modified wheat starch is altered in such a manner that its phosphate content is 2 to 10 $\mu$mol of C-6-phosphate/g of starch. In a preferred embodiment, the starch has a content of 2 to 8 $\mu$mol of C-6-phosphate/g of starch, and very particularly preferably 4 to 6 $\mu$mol of C-6-phosphate/g of starch.

Equally, in the case of the TAAB baked goods, an increase of dough yield was observed compared with the dough yield of the wild type baked goods. Dough yield is taken to mean by those skilled in the art the dough weight based on 100 parts of flour. In a further embodiment of the present invention, the dough yield of the TAAB doughs is increased by 1 to 10% compared with the wild type doughs, preferably by 2 to 8%, and particularly preferably by 3 to 5%.

In the use according to the invention, in addition, the baking yield in the case of baked goods made from modified wheat flour is increased by 1 to 10% compared with baked goods made from unmodified wheat flour.

Baking yield, in the context of the present invention, is taken to mean the weight of the baked goods achieved based on 100 parts of flour. In a further preferred embodiment, the baking yield is increased by 2 to 10%, particularly preferably by 3 to 8%, and very particularly preferably by 4 to 6%.

The greatest increase in baking yield resulted for the baguettes, in this case the yield of the TAAB baked goods was 5% higher than that of the wild type baked goods.

**Material and Methods**

In the examples use was made of the following methods. Use can be made of these methods to carry out the process according to the invention, they are specific embodiments of the present invention, but do not restrict the present invention to these methods. It is known to those skilled in the art that they can carry out the invention in an identical manner by modifying the described methods and/or by replacing individual method parts by alternative method parts.

**1. Plant material for production of the TAAB flour**

Use was made of wheat plants (*Triticum aestivum*) which express an R1 gene (alpha-glucan water dikinase, E.C.2.7.9.4; Lorberth et al. (1998) Nature Biotechnology 16: 473-477) from potato (*Solanum tuberosum*). The exact production of these plants (sequence used ID No. 1, transformation method, vectors used, selection of transgenic plants) is described extensively in patent application WO 02/34923 (in examples 1 and 2). The nucleotide and amino acid sequences of the R1 gene are reported in Seq ID No. 1 and Seq ID No. 2. The transformation proceeded according to the method of Becker et al., 1994, Plant J. 5(2): 229-307.
Ripe grains were harvested from these wheat plants (Line TAAB-40A-11-8). These grains, the flour obtained therefrom and also the starch were studied chemically and rheologically. The controls used were wheat plants of unmodified wild type variety Florida which were grown under the same cultivation conditions.

**Growth of plants:**

The seeds were planted out in the open air after previous vernalization.
The plants used were grown and cultivated as follows:

<u>Plant protection</u>: before planting out the seed the seed material was pretreated with imidacloprid (Gaucho, Bayer) to combat insect damage (100 cc/100 kg of seed material).
Preemergence herbicide: diflufenican (Brodal), 250 cc/ha;
Herbicides (postemergence): metsulfuron methyl (= sulfonylurea derivative; application: 6.7 g/ha; DuPont) and dicamba (application: 0.12 l/ha);
Fungicide: epoxiconazole (Allegro, application: 0.85 l/ha);
<u>Fertilization</u>: UREA $(NH_2)_2CO$: 125 kg/ha to blossom; thereafter 100 kg/ha.

**2. Production of the TAAB flour**

200 kg of wheat grains of line TAAB 40A-11-8 were ground using a Bühler-Mahlautomat (Gebr. Bühler Maschinenfabrik, Uzwill, Switzerland). 200 kg of wheat grains yielded 140 kg of four type 550 (yield 70%).

**3. Extraction of starch**

The wheat starch was isolated from the wheat flour using distilled water by means of the Perten-Glutomatic machine (Perten Instruments), as described in ICC-Standard No. 155. The starch was extracted with acetone, air-dried for 2 to 3 days and then ground in a mortar to powder.

**4. Moisture measurement**

The moisture of the bread sample is determined using a moisturemeter (Sartorius, Göttingen, Germany). The sample is dried at 115°C until the weight no longer decreases. The calculation proceeds according to the formula:

$$\text{moisture (\%)} = \frac{\text{initial weight} - \text{end weight}}{\text{initial weight}} \times 100$$

**5. Determination of the starch phosphate content in the C6 position (C6-P content)**

In the starch, positions C3 and C6 of the glucose units can be phosphorylated. To determine the C6-P content of the starch (as described by Nielsen et al., 1994, Plant Physiol. 105: 111-117), 100 mg of wheat starch were hydrolyzed in 500 μl of 0.7 M HCl for 4 h at 95°C with continuous shaking. Subsequently, the batches were centrifuged for 10 min at 13 000 rpm and the supernatants purified from suspended matter and turbidity by means of a filter membrane (0.45 μM). 20 μl of the clear hydrolyzate were mixed with 180μl imidazole buffer (300 mM imidazole, pH 7.4; 7.5 mM $MgCl_2$, 1 mM EDTA and 0.4 mM NADP). The measurement was carried out in a photometer at 340 nm. After measurement of the base absorption, the enzyme reaction was started by adding 2 units of glucose-6-phosphate dehydrogenase (from *Leuconostoc mesenteroides,* Boehringer Mannheim). The change in absorption is based on equimolar reaction of glucose-6-phosphate and NADP to form 6-phosphonogluconate and NADPH, the formation of NADPH being measured at the abovementioned wavelength. The reaction was followed until a plateau was reached. The result of this measurement is the content of glucose-6-phosphate in the hydrolyzate. From the identical hydrolyzate, on the basis of the content of glucose liberated, the degree of hydrolysis was determined. This is used to relate the content of glucose-6-phosphate to the fraction of hydrolyzed starch from the amount of fresh weight. For this 10 μl of hydrolyzate were neutralized by 10 μl of 0.7 M NaOH and subsequently diluted 1:100 with water. 4 μl of this dilution were admixed with 196 μl of measurement puffer (100 mM imidazole pH 6.9; 5 mM $MgCl_2$, 1 mM ATP, 0.4 mM NADP) and used for determination of the base absorption. The reaction was followed by adding 2 μl of enzyme mix (Hexokinase 1:10; glucose-6-phosphate dehydrogenase from yeast 1:10 in measurement puffer) and at 340 nm to the plateau. The measurement principle corresponds to the first reaction.
The result of this measurement gives the amount of glucose (in mg) which was liberated from the starch present in the starting material in the course of hydrolysis.
Subsequently, the results of both measurements are related, in order to express the content of glucose-6-phosphate per mg of hydrolyzed starch.
Other than in the case of relating the amount of glucose-6-phosphate to the fresh weight of the sample, by this calculation the amount of glucose-6-phosphate is only based on that part of the starch which was completely hydrolyzed to glucose and thus is also to be considered the source for glucose-6-phosphate.

**6. Analytical data of the flours**

The TAAB flour and also the wild type wheat flour were analyzed by standard methods of the (International Association for Cereal Science and Technology = ICC/www.icc.or.at) or of the American Association of Cereal Chemists (AACC / www.aaccnet.org). The standard used in each case is listed in brackets. Since it can be requested on the respective Internet page, it will not be described here again. The following parameters were studied:

1. Ash content (ICC Standard 104/1)
2. Protein content (ICC Standard 105/2)
3. Wet gluten content (ICC Standard 137/1)

4. Gluten Index (ICC Standard 155)
5. Sedimentation value (ICC Standard 116/1)
6. Degree of starch damage (AACC Method 76-31)
7. Falling number (AACC Method 22-08)
8. Farinograph (ICC Standard 115/1)

**7. Baking experiments procedure**

The baking experiments were carried out at Bayer BioScience GmbH (Potsdam, Germany) according to standard methods. Use was made for this not only of flour from genetically modified wheat plants, but also flour from wild type wheat plants as a control.
Figure 1 shows an overview of various baking processes. Those used in the present case are described hereinafter under 7.1. to 7.4.

**Direct dough procedure**
(rolls, baguettes, white pan bread)

**Indirect dough procedure**
(white pan bread, hamburger buns)

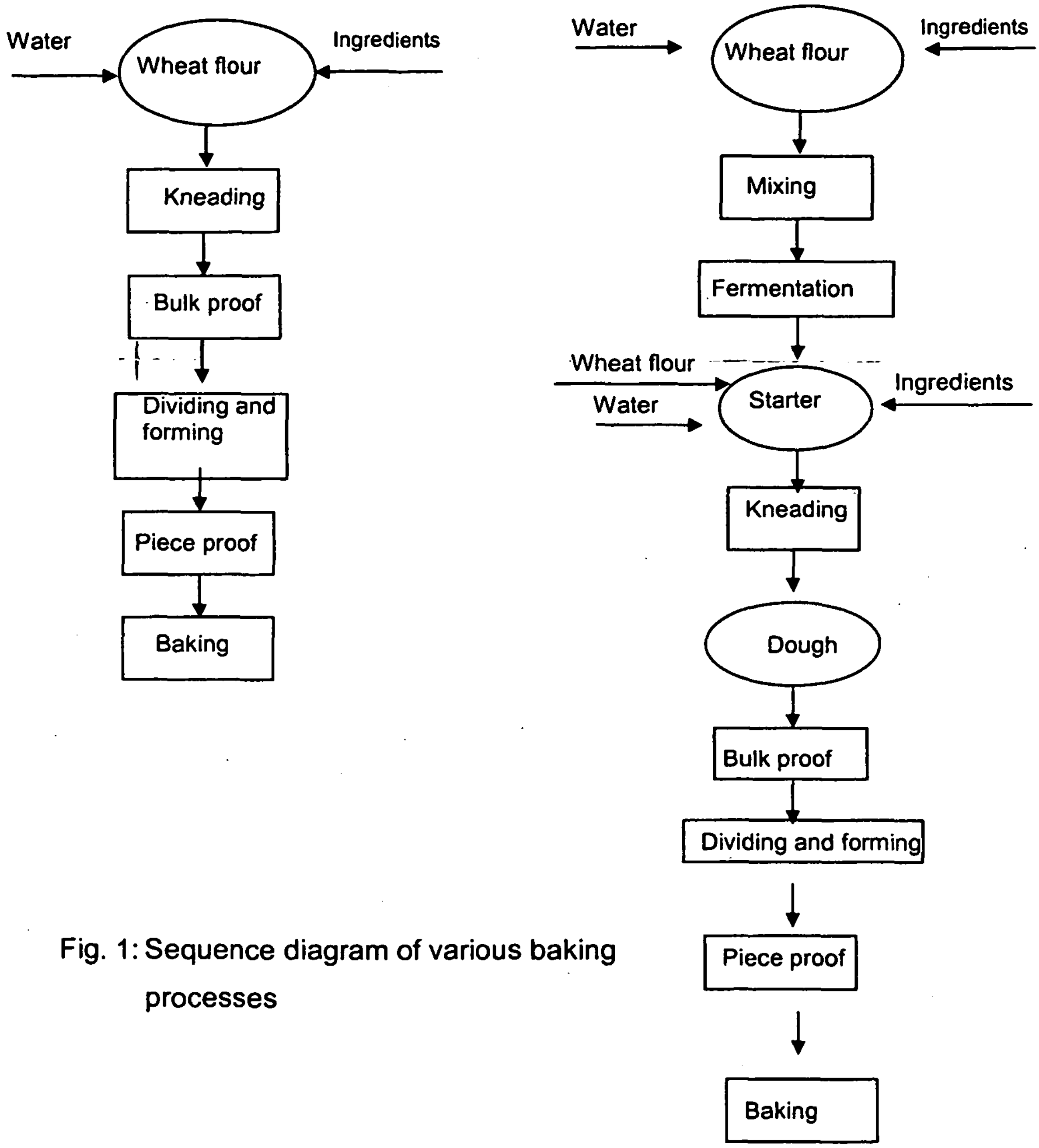


Fig. 1: Sequence diagram of various baking processes

**Compositions and methods of the baking experiments:**

**7.1 Prebaked frozen baguettes**

| Ingredients | Baker %* |
|---|---|
| Flour | 100 |

(continued)

| Ingredients | Baker %* |
|---|---|
| Salt | 2.0 |
| [a]Water | variable |
| Yeast (fresh) | 2.0 |

[a]Water as determined by the farinograph (+ 3%)
*Flour is set at 100%, the other components are then added thereto

| | |
|---|---|
| Mixer: | Spiral mixer (Diosna, 221 - Diosna Dierks & Söhne GmbH, Osnabrück/Germany) |
| Mix: | Two minutes at speed one (100 rpm)<br>Three minutes at speed two (200 rpm)<br>Desired dough temperature is 24°C. |
| Proof: | 20 minutes |
| Division: | Divide dough into dough pieces of 115 g, round by hand and form into the length |
| Piece proof: | The formed loaves are placed into baguette molds and fermented in the fermentation cabinet for 90 minutes at 24°C and 87% relative humidity |
| Baking: | 30 sec at 240°C<br>2.00 min at 210°C<br>15.30 min at 200°C |

During the baking process, the baguettes were sprayed with 80 ml of $H_2O$.

| | |
|---|---|
| Freezing: | Prebaked baguettes are frozen at -70°C for 1 h, thereafter stored in the deep freeze at -18°C |
| Baking out: | After storage for one week, the prebaked baguettes are end-baked at 215°C for 12 minutes. |

**7.2 Rolls**

| Ingredients | Baker %* |
|---|---|
| Flour | 100 |
| Salt | 2.0 |
| Yeast (fresh) | 6.0 |
| Baking fat | 1.0 |
| Sugar | 1.0 |
| Water[a] | variable |

[a]Water as determined by the farinograph

| | |
|---|---|
| Mix: | Two minutes at speed one (100 rpm)<br>Three minutes at speed two (200 rpm).<br>Desired dough temperature = 27°C. |
| Proof: | 20 minutes |
| Scale: | The dough is placed onto a forming plate and divided into 30 dough pieces using a dividing and rounding machine |

(continued)

| | |
|---|---|
| Piece proof: | The forming plate with the divided and formed dough is stored in the fermentation cabinet for 35 minutes at 32°C and 87% relative humidity |
| Baking: | 30 sec at 240°C<br>2.00 min at 210°C<br>15.30 min at 200°C |

During the baking process the rolls are sprayed with 80 ml of $H_2O$.

**7.3 Starter and dough for white pan bread (WPB)**

| Ingredients | Baker %* |
|---|---|
| Starter: | |
| Flour | 70.0 |
| Yeast (fresh) | 2.0 |
| Food yeast (without oxidants) | 0.5 |
| Water | 42.0 |
| Dough: | |
| Flour | 30.0 |
| Granulated sugar | 7.0 |
| Baking fat | 3.0 |
| Salt | 2.0 |
| Calcium propionate | 0.25 |
| Water[a] | variable (17.0) |

[a]Water is calculated on the basis of 59% of the amount of flour
*Flour is set at 100%, the other components are then added thereto

| | |
|---|---|
| Mixer: | Hobart A-120 Mixer (Hobart Corporation/OH/USA) withMcDuffee bowl and fork kneading attachment |
| Starter: | Mixing the ingredients for 1 minute at speed 1 (= 104 rpm) Further mixing for 1 minute at speed 1.<br>Dough temperature after mixing: 26°C ± 1°C. |
| Fermentation: | Fermentation proceeds at 29°C for 4 hours in a foil-covered vessel |
| Dough: | The dough ingredients are mixed in a mixing bowl for 30 seconds at speed 1 (= 104 rpm).<br>Addition of starter and mixing for a further 30 seconds at<br>speed 1 (= 104 rpm)<br>Mixing the dough at speed 2 (194 rpm) to optimum gluten development (recognizable on squeezing the dough between fingers).<br>Ideal dough temperature is 26°C ± 1°C |
| Proof time: | Proofing the dough for 20 minutes at 29°C in a covered vessel. |
| Dividing | into 2 loaves per batch (524g per loaf) |
| Intermediate fermentation: | Dough pieces (524g) proof for 10 minutes at room temperature |
| Forming: | Roller forming machine<br>Dimensions: top roll: 0.87cm; bottom roll: 0.67cm; Press plate: 3.1 cm; press plate width: 23cm. |

(continued)

| | |
|---|---|
| Fermentation: | The formed loaves are placed into bread molds in the fermentation cabinet at 43°C and 81.5% relative humidity. The dough should expand up to 1.5 cm above the top rim of the bread mold. |
| Baking: | 20 minutes at 215°C |
| Bread mold dimensions: (estimated) | Top (inside): 25 x 10.8cm |
| | Bottom (outside): 24.1 x 7.6 cm. |
| | Depth (inside): 7 cm |

### 7.2. Starter and dough for hamburger buns

| Ingredients | Baker %* |
|---|---|
| Starter: | |
| Flour | 70.0 |
| Yeast (fresh) | 3.0 |
| Water | 46.0 |
| Food yeast | 0.3 |
| Dough: | |
| Flour | 30.0 |
| High fructose corn syrup (42%) | 18.0 |
| Baking fat | 6.0 |
| Salt | 2.0 |
| Water | variable |
| Calcium propionate | 0.12 |

* Flour is set at 100%, the other components are then added thereto

| | |
|---|---|
| Mixer: | Hobart A-120 Mixer (Hobart Corporation/OH/USA) with McDuffee bowl and fork kneading attachment |
| Mixing dough: | Mixing the ingredients for 1 minute at speed 1 (104 rpm). |
| | Further mixing for 1 minute at speed 1 (104 rpm). |
| | After mixing the mixing dough should have a temperature of 26°C t 1°C |
| Fermentation: | The fermentation proceeds at 29°C for 3.5 hours in a foil-covered vessel |
| Bread dough: | The dough ingredients are mixed in a mixing bowl for 30 seconds at speed 1 (104rpm). |
| | Addition of the mixing dough and mixing for a further 30 seconds at speed 1 |
| | Mixing the dough at speed 2 (194 rpm) up to optimum gluten development. |
| | Ideal dough temperature is 26°C ± 1°C |
| Proof time: | Proofing the completely mixed dough for 10minutes at 29°C in a covered vessel. |
| Intermediate step: | Dividing the dough into pieces of 56 g which are brought into a round flat form |
| Piece proof: | The formed loaves are placed into bread molds and introduced into the fermentation cabinet at 43°C and 90% relative humidity. |
| | The dough should expand to 3.6 cm. |
| Baking: | 11 minutes at 224°C |
| Bread dimensions: | Weight (g) and volume (cc); measurement proceeds 30 minutes after baking. |

## Examples

### Example 1: Production of genetically modified wheat plants

The vector pUbiR1 which was used for transformation of the wheat plants was produced as described in WO 02/034923 (example 1). Likewise, in WO 02/034923 (example 2) production is described of the genetically modified wheat plants which carry the R1 gene from potatoes (*Solanum tuberosum*).
For the process according to the invention, genetically modified wheat plants of line TAAB 40A-11-8 were used. Seed material of this line and also of the unmodified wheat "Florida" (hereinafter termed "wild type") was planted as seed in Argentina and harvested.

### Example 2: Compilation of the properties of wheat flour of the genetically modified line compared with unmodified flour

Analysis of the wheat flours was performed according to standard methods of the ICC or of the American Association of Cereal Chemists (AACC). The following parameters were studied:

1. Ash content (ICC 104/1)
2. Protein content (ICC 105/2)
3. Wet gluten content (ICC 137/1)
4. Gluten index (ICC 155)
5. Sedimentation value (ICC 116/1)
6. Damaged starch (AACC 76-31)
7. Falling number (AACC 22-08)
8. Farinograph (ICC 115/1)

Table 1: Analytical data of the flours:

| Parameter | Wild type | TAAB 40A-11-8 |
|---|---|---|
| Ash content (%) | 0.56 | 0.58 |
| Protein % (Kjeldahl) | 13.8 | 14.5 |
| Wet gluten content (%) | 31 | 33 |
| Gluten index (%) | 80 | 76 |
| Sedimentation value (ml) | 38 | 39 |
| Damaged starch (%) | 5 | 5.6 |
| Falling number (s) | 418 | 451 |
| Farinograph: | | |
| Water absorption (%) | 58 | 62 |
| Dough development time (min) | 6 | 6.5 |
| Dough stability (min) | 10 | 11 |

Comparison of the analytical data shows that the modified TAAB flour, with retention of quality parameters, has a higher water absorption value than the modified wild type flour.

### Example 3: Compilation of the properties of wheat starch of the genetically modified line compared with wild type

Table 2: Properties of the wheat starches: compilation of the parameters and results described in WO 02/034923:

| Line | Wild type | TAAB 40A-11-8 |
|---|---|---|
| C-6-P in nmol/mg of starch | Not detectable | 5.0 |

(continued)

| Line | Wild type | TAAB 40A-11-8 |
|---|---|---|
| RVA Max | 100% | 124% |
| Min | 100% | 132% |
| Fin | 100% | 135% |
| T | 100% | 97% |
| Gel strength | 100% | 164% |
| DSC Tpeak | 64°C | 61°C |
| Tonset | 58°C | 56°C |

**Example 4: Results of baking experiments:**

Table 3: Weight and liquid losses and also yield of various baked products after baking:

| | Rolls | | Baguette | |
|---|---|---|---|---|
| | TAAB | WT | TAAB | WT |
| Weight loss % | 19.9 | 20.2 | 14.1 | 16.1 |
| Water loss / water in dough % | 45.1 | 46.9 | 30.1 | 35.1 |
| Bread moisture % | 30.3 | 28.6 | 38.1 | 35.5 |
| Bread moisture/volume (mg/ml) | 66 | 64 | 182 | 166 |
| | | | | |
| Dough yield % | 170.6 | 166.2 | 168.6 | 166 |
| Baking yield (%) | 137 | 133 | 144 | 139 |

Comparison of the products of genetically modified (TAAB) and unmodified wheat flour (WT). WPB = white pan bread /buns = hamburger buns.

Baking loss is the weight loss during baking owing to water evaporation. The baking loss in percent is fundamentally based on the dough weight, it is calculated as follows:

$$\text{baking loss (\%)} = \frac{\text{dough weight} - \text{bread weight}}{\text{dough weight}} \times 100$$

The results show that the weight loss of the bakery products from modified wheat flour is lower as a percentage than with the wild type.

By relating the weight loss to the amount of water present in the dough, the actual water loss can be calculated:

$$\text{water loss (\%)} = \frac{\text{dough weight} - \text{bread weight}}{\text{dough water}} \times 100$$

The water loss is calculated from the height of water addition which is different from the different flours and their water binding capacity in order to obtain the same dough consistency. The liquid loss of the bakery products of modified wheat flour is also less than that of the bakery products which were produced from unmodified flour.

The bread moisture based on the volume for all bakery products made from modified wheat flour was significantly higher than with the bakery products from unmodified wheat flour. The increased bread moisture has a beneficial effect on improved freshness retention of bakery products (extended shelf life).
The moisture was calculated as follows:

$$\text{moisture (\%)} = \frac{\text{initial weight} - \text{end weight}}{\text{initial weight}} \times 100$$

## Claims

1. The use of wheat flour having a phosphate content of at least 2 μmol of C-6-P/g of starch for reducing baking losses without simultaneous use of baking agents which reduce baking losses.

2. The use as claimed in claim 1, wherein modified wheat flour was used.

3. The use as claimed in either of claims 1 or 2, wherein the baking loss as weight loss after the baking process in baked goods from modified wheat flour is lower by 0.1 to 10% than in baked goods which were produced from unmodified wheat flour.

4. The use as claimed in one of claims 1 to 3, wherein the baking loss as water loss after the baking process is lower by 1 to 20% than in baked goods which were produced from unmodified wheat flour.

5. The use as claimed in one of claims 1 to 4, wherein the baking yield in baked goods made from modified wheat flour is increased by 1 to 10%.

6. The use as claimed in one of claims 1 to 5, wherein the wheat flour comprises a genetically modified starch.

## Patentansprüche

1. Verwendung von Weizenmehl mit einem Phosphatgehalt von wenigstens 2 μmol an C-6-P/g Stärke zum Verringern von Backverlusten ohne gleichzeitige Verwendung von Backmitteln, die Backverluste verringern.

2. Verwendung gemäß Anspruch 1, wobei modifiziertes Weizenmehl verwendet wurde.

3. Verwendung gemäß einem der Ansprüche 1 oder 2, wobei der Backverlust als Gewichtsverlust nach dem Backvorgang in Backwaren aus modifiziertem Weizenmehl um 0,1 bis 10% geringer als in Backwaren, die aus nichtmodifiziertem Weizenmehl hergestellt wurden, ist.

4. Verwendung gemäß einem der Ansprüche 1 bis 3, wobei der Backverlust als Wasserverlust nach dem Backvorgang um 1 bis 20 % geringer als in Backwaren, die aus nichtmodifiziertem Weizenmehl hergestellt wurden, ist.

5. Verwendung gemäß einem der Ansprüche 1 bis 4, wobei die Backausbeute in aus modifiziertem Weizenmehl hergestelltem Backwaren um 1 bis 10 % erhöht ist.

6. Verwendung gemäß einem der Ansprüche 1 bis 5, wobei das Weizenmehl eine genetisch modifizierte Stärke umfasst.

## Revendications

1. Utilisation de farine de blé ayant une teneur en phosphate d'au moins 2 μmol de C-6-P/g d'amidon pour réduire les pertes de cuisson sans utilisation simultanée d'améliorants de panification qui réduisant les pertes de cuisson.

2. Utilisation selon la revendication 1, **caractérisée en ce que** de la farine de blé modifiée a été utilisée.

3. Utilisation selon l'une ou l'autre des revendications 1 et 2, **caractérisée en ce que** la perte de cuisson en perte de poids après le procédé de cuisson dans les produits de boulangerie issus de farine de blé modifiée est 0,1 à 10 % plus faible que dans les produits de boulangerie qui ont été produits à partir de farine de blé non modifiée.

4. Utilisation selon l'une des revendications 1 à 3, **caractérisée en ce que** la perte de cuisson en perte d'eau après le procédé de cuisson est 1 à 20 % plus faible que dans les produits de boulangerie qui ont été produits partir de farine de blé non modifiée.

5. Utilisation selon l'une des revendications 1 à 4, **caractérisée en ce que** le rendement de cuisson dans les produits de boulangerie fabriqués à partir de la farine de blé modifiée est augmenté de 1 à 10 %.

6. Utilisation selon l'une des revendications 1 à 5, **caractérisée en ce que** la farine de blé comprend un amidon génétiquement modifié.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0234923 A
- WO 02034923 A
- EP 06090087 PCT
- US 60808336 B

### Non-patent literature cited in the description


- **NIELSEN et al.** *Plant Physiol.,* 1994, vol. 105, 111-117
- **LORBERTH et al.** *Nature Biotechnology,* 1998, vol. 16, 473-477
- **STAUFFER.** *American Soybean Association, Europe and Maghreb,* 2002
- **SIDHU ; BAWA.** *Int. Journal of Food Properties,* 2002, vol. 5 (1), 1-11
- **YASEEN et al.** *Polish J. of Food and Nutrition Sc.,* 2001, vol. 10-51 (4), 19-25
- **SIDHU ; BAWA.** *Int. Journal of Food Properties,* 2000, vol. 3 (3), 407-419
- **BECKER et al.** *Plant J.,* 1994, vol. 5 (2), 229-307